# EUROPEAN PATENT APPLICATION

(11) **EP 1 454 671 A1**
(43) Date of publication of application: **08.09.2004**
(21) Application number: 03388015.4
(22) Date of filing: 07.03.2003
(51) Int. Cl.: B01J 23/75, B01J 23/755, B01J 23/89, C01B 3/32, C02F 1/70, C02F 1/72, C02F 11/00

(54) **A catalyst for use in production of hydrogen by conversion of organic matter in water**

(71) Applicant: Pedersen, Karsten, 8600 Silkeborg (DK)
(72) Inventor: Pedersen, Karsten, 8600 Silkeborg (DK)
(74) Representative: Rotne, Jens Styrup

(57) **Abstract**

The water is pumped to a pressure above 5 MPa, heated to 300 - 450°C and supplied the catalyst consisting of a mixture of aluminium oxide and magnesium oxide as catalyst carrier for the active metals of nickel or cobalt. Additionally the catalyst can contain one or more metals among copper and silver.
The catalyst achieves high conversion and a high yield of hydrogen. The catalyst is a part of a production plant of hydrogen or hydrogen rich gas together with a procedure for making hydrogen or hydrogen rich gas.

## Description

This invention relates to a solid catalyst and a catalytic process with a solid catalyst and plant for production of hydrogen from organic compounds and water under pressure. The process produces a gas, composed mainly of hydrogen and carbon dioxide.

Processes of this art is suitable for conversion of organic matter with a high water content like fresh harvested biomass containing 40 - 50 weight % moisture and sewage sludge from waste water treatment plants containing 50 - 95 weight % moisture.

Hydrogen and carbon dioxide can be utilized for production of hydrocarbons including liquid fuels via the so-called Fischer Tropsch process in which carbon monoxide or carbon dioxide reacts with hydrogen under formation of hydrocarbons.

Pure hydrogen is easily produced from the product gas by using gas-membranes, because the pressurized process provides the required pressure for the separation processes.

Hydrogen can furthermore be utilized as fuel in fuel cells, which for the time being is under development on commercial scale in many car factories.

The present invention may make it possible for future cars with fuel cells to drive on aqueous organic solutions or suspensions of e.g. Sugar, flour or sludge from an industry and sewage treatment plant.

There are today several methods for production of hydrogen.

The most used technique in Western Europe is via steam reforming of natural gas with steam, where methane and higher hydrocarbons is reacted with steam under formation of hydrogen, carbon monoxide and carbon dioxide with a solid heterogeneous catalyst.

Alternatively hydrogen may be produced by steam reforming of aqueous methanol solutions obtaining a gas mixture of hydrogen carbon monoxide and carbon dioxide. By steam reforming it is only possible to convert organic matters, which is able to evaporate. It is for this instance impossible to utilize sugar flour, wood pesticides or sludge. Hydrogen could also be produced by electricity by adding direct current to water by which pure oxygen and hydrogen are formed at the electrodes.

Processes for conversion of organic matter have earlier been tested on experimental basis for formation of liquid or gaseous products with catalysts under pressure. The selectivity for formation of hydrogen has however been low and the catalysts activity has also been low.

Sealock et. al. (Sealock Jr., L.John; Elliot, Douglas C., US Patent 5019135 May 26, 1991 and Ind. Eng. Chem. Res. 1993,32,1542-1548) have converted lignocelluloses, which is a component in wood and biomass. The cellulose was converted at temperatures between 300 and 450°C in a pressurized tank at a pressure of at least 10 MPa. There was added water alkali and a reduced nickel catalyst, which was able to catalyse a reaction of the lignocelluloses matter into a gas consisting of methane hydrogen and carbon dioxide. The main component of the gas was methane.

The active catalysts resulted in a gas composition of 58 - 68% methane, 33 - 39% carbon dioxide and 0,5 - 2,4 % hydrogen at 350 °C and a pressure of 20 MPa. The space-time at the process conditions was approximately 45 minutes, excluding time of heating and cooling, which lasted for approximately 2 hours.

Utilisation of copper, cobalt or zinc resulted in inactive catalysts.

Carrier materials of aluminium oxide, zirconium dioxide, carbon, silicium dioxide and titanium dioxide were used. Only the there first-mentioned carrier materials were able to resist the high water vapour pressure. The others hydrolysed or dissolved. The suitable metals for formation of methane rich gas were ruthenium, rhodium and nickel.

Tomaki Miowa et al. (p. 396 - 404, 2001, Progress in Thermochemical Biomass Conversion. IEA Bio-energy, Blackwell Science Ltd. UK) has later reacted cellulose in hot water under pressure at 200 - 350 °C and a pressure in the range of 4 - 22 MPa, in which experiments a nickel catalyst was used. Cellulose decomposed to water-soluble products and further on with increasing time to gases. At low conversion hydrogen was formed which however reacted further on with carbon dioxide under formation of methane. The final gas composition was 49% carbon dioxide 46% methane and 5 % hydrogen.

The highest yields of hydrogen were achieved at 60 - 80 % conversion of the cellulose where the gas contained 35 % hydrogen, 15 % methane and 49% carbon dioxide. The time of reaction was 1 hour in a closed tank.

The catalysts according to the invention comprises a porous carrier material of a mixture of aluminium oxide and magnesium oxide, the carrier having on its surface a metal from the periodic system group VIII, preferably cobalt or nickel and optional a metal from side group Ib, preferably copper or silver.

Consequently, in one aspect the present invention relates to a catalyst including at least one metal selected from group VIII of the periodic system placed on the surface of a carrier comprising aluminiumoxide and magnesiumoxide.

In one preferred embodiment the catalyst according to the invention comprises from 0,1 to 40 weight-% nickel, preferably from 0,5 to 32 weight-% nickel, more preferred from 1,0 to 25 weight-% nickel. The catalyst may optional comprise from 0,01 to 40 weight-% copper, preferably from 0,05 to 32 weight-% copper, more preferred from 0,08 to 25 weight-% copper. Moreover, the catalyst may comprise from 0,01 to 10 weight-% silver, preferably from 0,03 to 6 weight-% silver, more preferably from 0,05 to 4 weight-% silver.

In a second preferred embodiment the catalyst according to invention comprises from 0,1 to 40 weight-% cobalt, preferably from 0,5 to 32 weight-% cobalt, more preferred from 1,0 to 25 weight-% cobalt. The catalyst may optionally comprise from 0,01 to 40 weight-% copper, preferably from 0,04 to 32 weight-% copper, more preferably from 0,05 to 25 weight-% copper. Furthermore, the catalyst may comprise from 0,1 to 40 weight-% silver, preferably from 0,2 to 30 weight-% silver, more preferably from 0,4 to 20 weight-% silver.

In a second aspect the invention relates to a plant for production of hydrogen from organic matter optionally including noxious compounds in water comprising a unit comprising at least one catalyst according to the invention and as defined above.

Moreover, in a third aspect the invention relates to a process for production of hydrogen by conversion of organic compounds in water comprising the step of passing the organic compounds in water through a catalyst according to the invention and as defined above.

In the process according to the invention the organic compounds in water is suitable passed through the catalyst under pressure and elevated temperature, preferably under a pressure of 5-50 MPa, more preferably a pressure of 5-35 MPa, even more preferred a pressure of 10- 25 MPa, and a temperature from 100 to 500°C, preferably from 250 to 475°C, and even more preferred from 300 to 450°C.

The special effect obtained with the this invention is a procurement of a catalyst which reacts with organic matter and convert it with steam into a gas with a very high content of hydrogen, typically higher than 60 % by volumes and a catalyst type with a reactivity much higher than earlier have been obtained.

This effect is connected with the fact that the invented catalyst activity only has a limited decrease within 24 hours on stream. Within this period the conversion stabilizes on a constantly high level while catalysts based on nickel on aluminium oxide keep on deactivating to a very low level.

The catalysts acts by reacting organic matter with water and convert it into hydrogen and carbon dioxide on the active surface of the catalyst.

The reactions take place in water/steam at a temperature preferably between 300 and 450 °C and a pressure preferably above 5 MPa (50 Bar). A high pressure is preferred because the reaction rate increases with the square of the pressure.

The process utilizes the ability of water to dissolve organic matter under pressure at elevated temperature. Increasing the temperature increases the solubility. Increasing the temperature also increases the vapour pressure.

Wood is soluble in water under pressure at 200 - 300 °C. Wood substantially consists of nearly equal amounts of lignin, hemi cellulose and cellulose. The matter is composed of polymers of phenol, xylose and glucose.

For that reason the catalysts according to the invention was tested with the water-soluble monomers, building bricks in biomass and more organics matters.

The invention will now be explained in further details with reference to an example and a drawing in which:

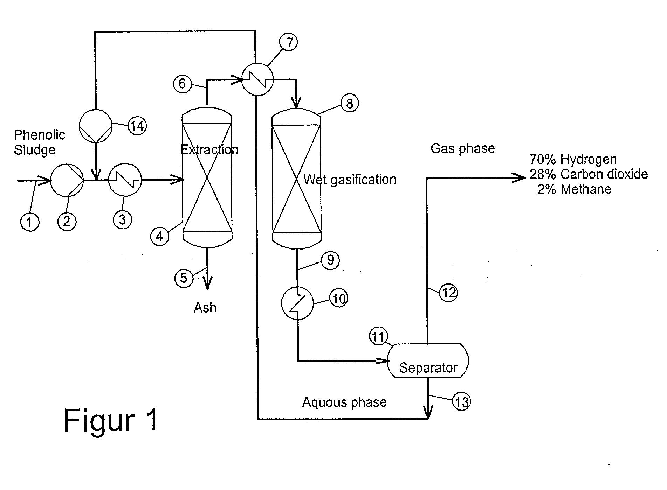

Fig. 1 shows a plant, in which the catalyst according to the invention may be used.

### Example

The process and a plant, in which the catalyst according to the invention may operate, are shown in figure 1.

The wet organic matter (1) is pumped (2) to a heat exchanger or heater (3), where it is heated to 150 - 300 °C, where organic matter depolymerises under a pressure of 5-35 MPa and dissolves in water in the reactor (4). Unconverted organic matter and ash is removed in the bottom of the container. The under pressure extracted matter (6) is heated to the reaction conditions in the range of 300 - 450 °C by the heat exchanger (7). The dissolved organic matter is then brought in contact with the catalyst, filled in the following reactor (8). In the reactor the organic matter are converted into hydrogen and carbon dioxide. The mixture of products (9) is cooled (10) and the gas and liquid are separated in the separator (11).

Water and remains of unconverted matter (13) are recirculated and pumped back (14) to the raw material.

The catalysts according to the invention were made by first forming the carrier by suspending aluminium hydroxide in water and add a solution of magnesium acetate. Sodium hydroxide was subsequently added to adjust to pH 8, during which magnesium hydroxide precipitates on the suspended aluminium hydroxide. The suspension was filtrated and the filter cake was washed with deionised water. The mixed oxide was then dried at 110 °C and subsequently baked at 700 °C for 16 hours.

Then the catalyst carrier was ready for impregnation with metal salts.

It is also possible to buy the carrier of the mixed oxide e.g. under the name magnesium aluminates. It is important to ensure that the carrier is not baked at a too high temperature, which will result in a carrier with a low surface area and a corresponding low activity.

The metals were placed on the surface of the carrier, according to the following procedure. Metal acetates or metal nitrates were dissolved in water and the porous carrier was immersed in the liquid for 2 hours. Then the impregnated carrier was heat treated at 500 °C for 16 hours, during which the metal salts were decomposed under formation of crystals of the mixed metal oxide on the surface of the catalyst carrier.

Different catalysts with different composition of the mixed oxide of the carrier and the metals among nickel, cobalt, copper and silver were tested with the following aqueous solutions: 10 weight-% glucose in water, 10 weight-% xylose in water, 8 weight-% phenol in water and 8 weight-% methanol in water.

During the experiments the catalysts were shaped as granulate. The average diameter was 0,5-1 mm. In each experiment 20 ml catalyst (approximately 20-25 g) was used and placed in a reactor. The reactor was a steel tube with an internal diameter of 10 mm. The length of the catalyst bed was 300 mm. The reactor and feed tube was placed in a hot-air oven, ensuring a uniform temperature during testing.

The aqueous solutions were fed the reactor with a high-pressure pump with a capacity of 0,1-10 ml/minute. The liquid was heated to the reaction temperature in the feed steel tube before entering the reactor.

The products were cooled in a steel cooler under pressure, which was released by a backpressure valve, ensuring a stable working pressure of the process.

The temperature during the activity tests was 380°C and the pressure 20 MPa.

The composition of the gas was analysed on a gas chromatograph with a thermal conductivity (TCD) detector with respect to the gas components hydrogen, carbon dioxide, methane and carbon monoxide.

The concentration of liquid products in the condensate from the reactor was measured on a gas chromatograph with a flame ionising (FID) detector

The amount of gas was measured with a dry gas meter after drying the gas with calcium chloride as drying agent.

The catalyst test was initiated with an activation of the catalyst, where the metal oxide was hydrogenated to metal by a reducing gas. This was carried out by heating the catalyst in the reactor, contemporary with pumping an aqueous (8 weight-%) solution of methanol to the reactor. At approximately 300 °C the pressure increased due to the gaseous decomposition products, which were a mixture of mainly hydrogen and carbon dioxide. Hydrogen reacted with the metal oxides and converted it into metallic state as small crystals on the surface of the carrier. The progress of the reduction was followed by the amount of gas evolved and the composition of the gas leaving the reactor. When the reduction of metal oxide to metal initiated, the gas evolution began and the gas leaving the reactor was mainly carbon dioxide ending up with gas containing hydrogen. During the reduction the used flow LHSV (Liquid Hourly Space Velocity) of methanol solution was 2.5 litre liquid per litre of catalyst per hour, which corresponds to a theoretical space-time in the reactor on 24 minutes.

When the catalyst was activated, an aqueous solution of phenol was fed to the reactor with a LHSV of 5 litre per litre catalyst per hour corresponding to a theoretical space-time in the reactor on 12 minutes. Phenol was used in the activity tests, because phenol turned up to be the most difficult component to convert of the listed aqueous solutions. But the gas composition from conversion of the different organic compounds was equal on the whole: A gas with a composition of approximately 70% hydrogen, 28 % carbon dioxide and 2 % methane.

The time of operation is important, because the catalyst according to the invention had a stable operation after 24 hours while known catalysts deactivated to a level of low activity.. Either the catalysts were active and stable after this period or they were deactivated to a low level of activity.

A reference catalyst consisting of 20 weight-% nickel on an aluminium oxide had only 2% conversion at 20 MPa.

By changing the carrier material to an equal amount of aluminium oxide and magnesium oxide it was surprisingly observed that the activity of nickel was stable for the 100 hours the experiment lasted. The conversion of phenol was 65% and the high content of hydrogen was measured after the stabilizing period of the catalyst.

By addition of copper to the nickel-catalyst with magnesium/aluminium oxide as carrier the conversion was surprisingly increased to 94 %.

By addition of silver to the nickel catalyst with the magnesium/aluminium oxide as carrier the conversion of phenol was increased to 83 %.

In the same way cobalt catalyst was tested and similar surprising positive effects were observed by using magnesium/aluminium oxide as carrier and addition of copper and silver to the cobalt in the catalyst.

The mechanism is not yet known, because thermodynamic calculations show that the equilibrium composition of the gas with the med methanation reaction should be composed mainly by methane and carbon dioxide.

By changing the carrier of a nickel catalyst from aluminium oxide to a mixture of magnesium/aluminium oxide, a catalyst is obtained with a higher activity at the reaction conditions. Furthermore, the carriers ability to resist weakening caused by dissolution in the compressed hot water, leads to a catalyst with a higher stability during long terms of operation.

A nickel catalyst on this carrier material according to the invention has not shown any sign of physical weakening after 2000 hours of operation.

The process for production of hydrogen is nearly thermo neutral, why heatexchange and utilisation of remanent heat may reduce cost for this process. By formation of methane and higher hydrocarbons, the overall reaction becomes exothermal. Selection of catalyst is thus essential. Calculations shows that 1 litre reaction volume is able to produce 7 m³ hydrogen per hour from biomass with 50% moisture content. The process according to the invention is suitable for conversion of all organic matter, including waste products like pesticides, phenol and similar organic noxious compounds in water into a gas mixture mainly composed of 65 -70 % hydrogen, 30-35 % carbon dioxide and 1-2 % methane.

The process and the catalyst according to the invention makes it possible to produce a gas with a very high hydrogen content by conversion of wet organic matter in one step, without drying the organic matter before conversion into gas. Furthermore the product gas is pressurized, which facilitates production of pure hydrogen by using gas selective membranes. Consequently the process according to the invention makes it possible to convert non-volatile, wet organic matter into hydrogen.

## Claims

1. A catalyst including at least one metal selected from group VIII of the periodic system placed on the surface of a carrier comprising aluminiumoxide and magnesiumoxide.

2. A catalyst according to claim 1, wherein the catalyst further comprises from 0,1 to 40 weight-% nickel.

3. A catalyst according to claim 2, wherein the catalyst comprises from 0,01 to 40 weight-% copper.

4. A catalyst according to claim 2, wherein the catalyst comprises from 0,1 to 10 weight-% silver.

5. A catalyst according to claim 1, wherein the catalyst comprises from 0,1 to 40 weight-% cobalt.

6. A catalyst according to claim 5, wherein the catalyst comprises from 0,01 to 40 weight-% copper.

7. A catalyst according to claim 5, wherein the catalyst comprises from 0,1 to 40 weight-% silver.

8. A plant for production of hydrogen from organic matter optionally including noxious compounds in water comprising a unit with at least one catalyst according to any one of the claims 1 to 7.

9. A process for production of hydrogen by conversion of organic compounds in water comprising the step of passing the organic compounds in water through a catalyst according to any one of the claims 1 to 7.

10. A process according to claim 10 wherein the organic compounds in water is passed through the catalyst under pressure and elevated temperature, preferably under a pressure of 5-35 MPa and a temperature from 300 to 450°C.
